# EUROPÄISCHE PATENTSCHRIFT

(11) **EP 1 597 426 B1**
(45) Veröffentlichungstag und Bekanntmachung des Hinweises auf die Patenterteilung: **01.09.2010**
(21) Anmeldenummer: 04705759.1
(22) Anmeldetag: 28.01.2004
(51) Int. Cl.: D06P 3/32, C09B 67/00

(54) **WASSERVERDUENNBARE FORMULIERUNG VON METALLKOMPLEXFARBSTOFFEN**
WATER-DILUTABLE METALLIZED DYE FORMULATION
FORMULATION DE COLORANTS METALLIFERES DILUABLE DANS L'EAU

(30) Priorität: 13.02.2003 DE 10306184
(43) Veröffentlichungstag der Anmeldung: 23.11.2005
(73) Patentinhaber: BASF SE, 67056 Ludwigshafen (DE)
(72) Erfinder: SCHMITT, Michael, 67549 Worms (DE); ADAMS, Stefan, 67065 Ludwigshafen (DE)
(86) Internationale Anmeldenummer: PCT/EP2004/000702
(87) Internationale Veröffentlichungsnummer: WO 2004/072361

(56) Entgegenhaltungen:
- EP-A- 0 061 997
- EP-A- 0 065 252
- EP-A- 0 524 520
- EP-A- 0 825 232
- WO-A-81/03179
- DE-A- 3 340 483
- DE-A- 3 609 590
- US-A- 4 550 158
- DATABASE WPI Section Ch, Week 199124 Derwent Publications Ltd., London, GB; Class A14, AN 1991-175578 XP002280405 & RO 99 710 A (INST CHIM CENT COLORANTI) 28. September 1990 (1990-09-28) in der Anmeldung erwähnt
- DATABASE WPI Section Ch, Week 198919 Derwent Publications Ltd., London, GB; Class A97, AN 1989-143190 XP002280406 & RO 95 762 A (INST CHIM BUCURESTI) 30. Oktober 1988 (1988-10-30) in der Anmeldung erwähnt
- CHEMICAL ABSTRACTS + INDEXES, AMERICAN CHEMICAL SOCIETY. COLUMBUS, US, Bd. 119, Nr. 18, 1. November 1993 (1993-11-01), XP000408482 ISSN: 0009-2258 & CHEMICAL ABSTRACTS, Bd. 119, Nr. 18, 1. November 1993 (1993-11-01), Columbus, Ohio, US; abstract no.: 183300r, Z. OLSZEWSKI ET. AL.: "Dyeing leather with a 1:2 chromium-azo compound complex"

## Beschreibung

Die Anmeldung betrifft Farbmittelformulierungen, enthaltend
5 bis 25 Gew.-Teile mindestens eines nicht sulfonierten Azometallkomplexfarb-stoffes,
75 bis 95 Gew.-Teile eines organischen Lösungsmittels,
1 bis 40 Gew.-Teile Polyvinylpyrrolidon und

1 bis 40 Gew.-Teile eines nichtionischen Tensids,
wobei sich die Gew.-Teile auf 100 Gew.-Teile der Mischung aus den Komponenten A und B beziehen.

Bei vielen Einfärbungen, insbesondere in der Zurichtung von Leder, werden Azometallkomplexfarbstoffe eingesetzt. An diese Farbstoffe werden hohe Anforderungen bezüglich eines ausgewogenen guten Eigenschaftsprofils, insbesondere bezüglich der Wassertropfenechtheit und Lichtechtheit gestellt. Farbstoffformulierungen sulfogruppenhaltiger Azometallkomplexfarbstoffe, die Polyvinylpyrrolidon enthalten, sind bekannt. Diese können jedoch nicht für Färbungen verwendet werden, bei denen die Wasserechtheit eine wichtige Rolle spielt, da die sulfongruppenhaltigen Farbstoffe wasserlöslich sind. Daher werden häufig nicht sulfonierten Farbstoffe verwendet, die aufgrund ihrer hydrophoben Eigenschaft gute Wasserechtheiten ergeben.

Derartige Farbstoffe werden üblicherweise als Lösungen in organischen Lösungsmitteln mit einer Konzentration zwischen etwa 5 und 25 % angeboten. Um diese Lösungen auf die für die übliche Sprühfärbung verwendeten ca. 2 gew.-%igen wässrigen Spritzflotten zu verdünnen, muss neben Wasser auch organisches Lösungsmittel zugesetzt werden, um die Farbstoffe in für die Sprühfärbung stabilen Lösung zu halten. Dies führt jedoch dazu, dass teure Lösungsmittel in hohen Mengen eingesetzt werden müssen. Weiterhin dampfen diese Lösungsmittel beim Trocknen des eingefärbten Leders aus, sodass hohe sicherheitstechnische und arbeitshygienische Anforderungen an die Färbeeinrichtungen gestellt werden, die hohe Investitionen und laufende Kosten verursachen. Desweiteren stellt der Lösungsmitteleinsatz eine Umweltbelastung dar.

Es ist aus der rumänischen Patentschrift RO 99710 bekannt, einem nicht sulfonierten Azometallkomplexfarbstoff, der in einem Lösungsmittelgemisch aus Ethylenglykolmonoethylether und Ethylglykolacetat hergestellt und nicht abgetrennt wurde, eine geringe Menge von Polyvinylpyrrolidon zur Stabilisierung der Lösung des Farbstoffes gegen Auskristallisieren zugegeben. Gemäß der Schrift muss diese Lösung zur Sprühfärbung jedoch neben Wasser auch mit einem organischen Lösungsmittel verdünnt werden.

Eine ähnliche Lehre gibt die rumänische Patentschrift RO 95762, in der nicht sulfonierte Azometallkomplexfarbstoffe gelöst in organischen Lösungsmittel mit geringen Mengen Polyvinylpyrrolidon K30 versetzt werden. Auch diese Lösungen werden mit organischen Lösungsmittel und mit Wasser verdünnt.

Es bestand daher die Aufgabe, lagerstabile flüssige Formulierungen von nicht sulfonierten Azometallkomplexfarbstoffen zu finden, die auf einer Anwendungskonzentration in der Sprühfärbung von ca. 2 % nur mit Wasser verdünnt werden können. Diese Anwendungslösung soll ihrerseits ausreichende Stabilität aufweisen und eine Einfärbung, insbesondere bei Leder, mit einem ausgewogenen Eigenschaftsprofil wie gute Egalität, Brillanz, Eindringtiefe, Lichtechtheit, Reibechtheit und Wassertropfenechtheit ergeben.

Demgemäss wurde die oben angegebene Farbmittelformulierung gefunden. Weiterhin wurden gefunden ein Verfahren zur Herstellung dieser Farbmittelformulierung, ihre Verwendung zum Färben von Leder und ein Leder, das mit der genannten Farbmittelformulierung gefärbt ist.

Die Komponente A ist in der Farbmittelformulierung zu 5 bis 25 Gew.-Teilen, bevorzugt 8 bis 20 Gew.-Teilen vertreten.

Hier und im folgenden beziehen sich die genannten Gew.-Teile auf 100 Gew.-Teile der Mischung aus den Komponenten A und B.

Nicht sulfonierte Azometallkomplexfarbstoffe A sind an sich bekannt. 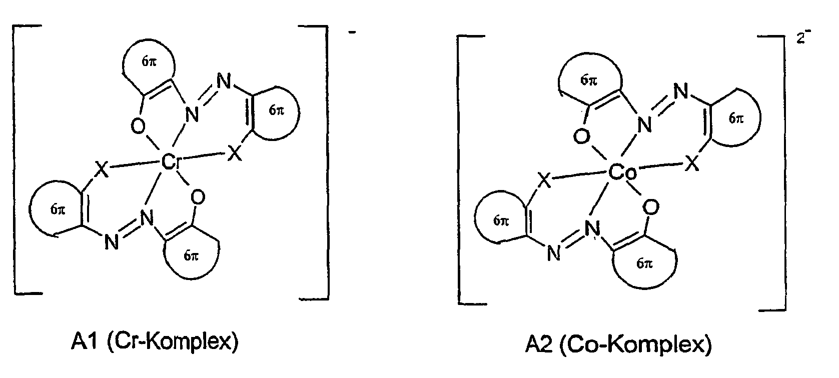 X= O, CO2, NH
Azometallkomplexfarbstoffe werden nach bekannten Methoden aus o,o'-Dihydroxyazo-(I), o,o'-Carboxyhydroxyazo-(II) oder Hydroxyaminoazofarbstoffen (III) synthetisiert. 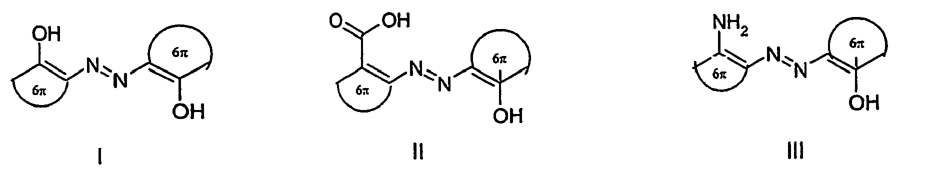 Die aromatischen Gruppen sind in den meisten Fällen Benzol, Naphthalin, Pyrazol oder offenkettige Enol-Ketoverbindungen.

Beispiele für I,II und III sind Derivate des o-Hydroxybenzolazo-o'-hydroxybenzol, o-Hydroxybenzolazo-β-naphthol, β-Naptholazo-β-naphthol, o-Hydroxybenzolazopyrazolon, o-Hydroxybenzoazoacetessigamide oder o-Carboxybenzolazopyrazolon.

Die Azofarbstoffe bilden dreizähnige Komplexliganden, sie bilden drei Bindungen zu Übergangsmetallionen aus.

Die Azometallkomplexfarbstoffe basieren im allgemeinen auf Tetra-, Dis- und insbesondere Monoazofarbstoffen und werden üblicherweise beschrieben als monoatomige Metallchelate mit ein oder zwei gleichen oder unterschiedlichen Farbstoffmolekülen abhängig von der eingesetzten Metallkomponente. Bevorzugt sind die 1:2 Metallkomplexfarbstoffe, beispielsweise mit Chrom und Kobalt als Metallkomponente. Diese Farbstoffe sind sulfogruppenfrei und weisen üblicherweise unter Normalbedingungen eine Löslichkeit in Wasser von unter weniger als 10g/l. Die Farbstoffe werden nach allgemein bekannten Verfahren wie in H.Baumann und H.R. Hensel, Fortschritte der chemischen Forschung, Bd. 7, S. 643-783 (1967) beschrieben, hergestellt.

Geeignete Monazofarbstoffe zur Herstellung der 1:2 Azometallkomplexe A1/A2 werden nach bekannten Methoden durch Diazotierung vom Aminoaromaten als Diazokomponente DK und anschließender Kupplung auf die Kupplungskomponente KK erhalten.

DK- N=N-KK

Beispiele für Diazokomponenten sind:

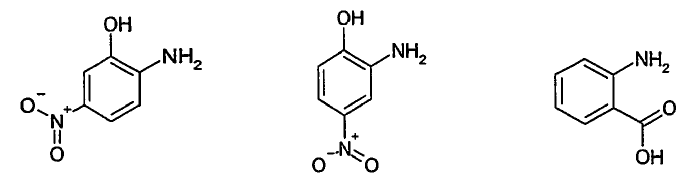

Beispiele für Kupplungskomponenten sind:

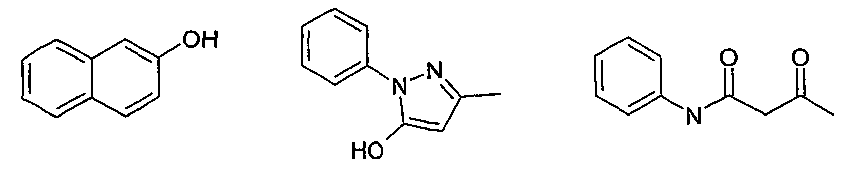

Nach bekannten Methoden werden 1:2 Azometallkomplexfarbstoffe hergestellt durch Reaktion von zwei Azofarbstoffmolekülen mit einem Metallion. Sind die beiden Azofarbstoffmoleküle identisch, so werden symmetrische 1:2 Azometallkomplexe erhalten. Werden Gemische aus Azofarbstoffe zur Reaktion gebracht, so werden statistische Gemische von unsymmetrischen 1:2 Azometallkomplexfarbstoffen erhalten. Vorzugsweise werden symmetrische 1:2 Azometallkomplexfarbstoffe eingesetzt.

Beispiele sind

| | |
|---|---|
| CI: | Colour Index (CI) Acid Violet 74: |
| CI: | Acid Black 61, Solvent Black 34, 12195 |
| CI: | Acid Red 225, Solvent Red 8, 12715 |
| CI: | Acid Red 226, Solvent Red 100, 12716 |
| CI: | Acid Orange 89, Solvent Orange 44 |
| CI: | Acid Red 227 |
| CI: | Acid Black 63, 12195, Solvent Black 35 |
| CI: | Acid Yellow 59, 18690 / Acid Yellow 118 |
| | Acid Yellow 121, 18690 / Solvent Yellow 21 |
| CI: | Acid Yellow 119, Solvent Orange 45, 11700 |
| CI: | Acid Brown 50, Solvent Brown 37 |
| CI: | Acid Orange 92, |
| CI: | Acid Red 228 |

Die Komponente B ist zu 75-95%, bevorzugt 80 - 92% Teilen in der Farbmittelformulierung enthalten. Als organische Lösungsmittel sind die für die nicht sulfonierten Azometallkomplexfarbstoffe üblichen wassermischbaren Lösungsmittel geeignet wie C₁-C₄-Alkanole, z.B. Methanol, Ethanol, Propanol, Isopropanol, Butanol, Isobutanol, sec-Butanol oder tert-Butanol, Carbonsäureamide mit bis zu 4 C-Atomen, wie N,N-Dimethylformamid oder N,N-Dimethylacetamid, Ketone oder Ketoalkohole mit bis zu 4 C-Atomen, wie Aceton, Methylethylketon oder 2-Methyl-2-hydroxy-pentan-4-on, Ether mit bis zu 5 C-Atomen, wieTetrahydrofuran oder Dioxan, Mono-, Oligo- oder Polyalkylenglykole oder-thiogly-kole mit bis zu 15 C-Atomen, die C₂-C₆-Alkyleneinheiten aufweisen, wie Ethylenglykol, 1,2- oder 1,3-Propylen-glykol, 1,2- oder 1,4-Butylenglykol, Hexan-1,6-diol, Diethylenglykol, Triethylenglykol, Dipropylenglykol, Thiodiglykol, Polyethylenglykol oder Polypropylenglykol, andere Polyole mit bis zu 15 C-Atomen und bis zu 10 OH-Gruppen, wie Glycerin oder Hexan-1,2,6-triol, C₁-C₄-Alkylether von mehrwertigen Alkoholen mit bis zu 15 C-Atomen und bis zu 10 OH-Gruppen, wie Ethylenglykolmono-methyl- oder -monoethylether, Diethylenglykolmonomethyl- oder - monoethylether, Diethylenglykolmonobutylether (Butyldiglykol) oder Triethylenglykolmono-methyl- oder -monoethylether, C₁-C₄-Alkyl-ester von mehrwertigen Alkoholen mit bis zu 16 C-Atomen und bis zu 10 OH-Gruppen, γ-Butyrolacton oder Dimethylsulfoxid. Geeignete Lösungsmittel sind ferner Lactame, wie Pyrrolidin-2-on oder N-Methylpyrrolidin-2-on, Harnstoff, cyclische Harnstoffe, wie 1,3-Dimethylimi-dazolidin-2-on oder 1,3-Dimethylhexahydropyrimid-2-on.

Bevorzugte Lösungsmittel sind Mono-, Di- oder Trialkylen-glykole, die C₂-C₄-Alkyleneinheiten aufweisen sowie Oligo- und Polyalkylenglykole mit Ethylen- und/oder Propyleneinheiten sowie deren C₁-C₄-Alkylether und C₁-C₄-Alkylester. Ganz besonders bevorugt sind Ethylenglykol, 1,2- oder 1,3-Propylenglykol, Methylglykol, Etyhlglykol, Butylglykol, Methyldiglykol, Ethyldiglykol, Butyldiglykol, 1-Methoxypropanol, N-Methylpyrrolidon.

Es ist vorteilhaft, wenn die verwendeten Lösungsmittel in Verdünnung mit Wasser vollständig mischbar sind.

Als Komponente C werden 1 bis 40, bevorzugt 5 bis 20 Gew.-Teile an sich bekannte Polyvinylpyrrolidone eingesetzt. Unter Polyvinylpyrrolidon im Sinne dieser Erfindung werden einmal die Homopolymerisate des N-Vinylpyrrolidons verstanden und zum anderen auch die Copolymerisate des N-Vinylpyrrolidons mit anderen ethylenisch ungesättigten Monomeren wie Vinylacetat. Die Copolymerisate enthalten üblicherweise zwischen 40 und 80 Gew.-% N-Vinylpyrrolidon einpolymerisiert. Der Gewichtsmittelwert des Molekulargewichtes der eingesetzten Polyvinylpyrrolidone (M_{w}) beträgt im allgemeinen höchstens 40 000, bevorzugt höchstens 20 000, insbesondere höchstens 15 000. Gute Effekte werden mit M_{w}-Werten über 1000, bevorzugt über 2000 und insbesondere über 5000, erhalten. Der Gewichtsmittelwert des Molekulargewichtes von Polymeren ist durch allgemein bekannte Methoden, beispielsweise durch Gelpermeationschromatographie oder durch Messung der Lichtstreuung verdünnter Lösungen der Polymere messbar (siehe beispielsweise BASF Produktinformation "Luviskol^{®}, Luvitec^{®}, Luvicross^{®}, 1997) (®: eingetragene Marke der BASF Aktiengesellschaft).

Das nichtionische Tensid D ist in der Farbmittelformulierung mit 1 bis 40, bevorzugt 5 bis 20 Gew.-Teile enthalten.

Als nichtionische Tenside eigenen sich beispielsweise alkoxylierte C₈-bisC₂₂-Alkohole wie Fettalkoholalkoxylate oder Oxoalkoholalkoxylate. Die Alkoxylierung kann mit Ethylenoxid, Propylenoxid und/oder Butylenoxid durchgeführt werden. Als Tensid einsetzbar sind hierbei sämtliche alkoxylierten Alkohole, die mindestens zwei Moleküle eines vorstehend genannten Alkylenoxids addiert enthalten. Auch hierbei kommen Blockpolymerisate von Ethylenoxid, Propylenoxid und/oder Butylenoxid in Betracht oder Anlagerungsprodukte, die die genannten Alkylenoxide in statistischer Verteilung enthalten. Pro Mol Alkohol verwendet man 2 bis 50, vorzugsweise 3 bis 20 mol mindestens eines Alkylenoxids. Vorzugsweise setzt man als Alkylenoxid Ethylenoxid ein. Die Alkohole haben vorzugsweise 10 bis 18 Kohlenstoffatome.

Eine weitere Klasse geeigneter nichtionischer Tenside sind Alkylphenolethoxylate mit C₆-bis-C₁₄-Alkylketten und 5 bis 30 mol Ethylenoxideinheiten.

Neben den alkoxylierten Alkoholen können auch Addukte aus den genannten Alkylenoxiden oder Alkylphenolethoxtylate mit C₆-bis-C₁₄-Alkylketten mit C₈-bisC₂₂-, bevorzugt C₁₀-bisC₁₈-Aminen, -Amiden oder -Carboxylaten eingesetzt werden.

Eine andere Klasse nichtionischer Tenside sind Alkylpolyglucoside mit 8 bis 22, vorzugsweise 10 bis 18 Kohlenstoffatomen in der Alkylkette. Diese Verbindungen enthalten meist 1 bis 20, vorzugsweise 1,1 bis 5 Glucosideinheiten.

Eine andere Klasse nichtionischer Tenside sind N-Alkylglucamide der allgemeinen Struktur II oder III 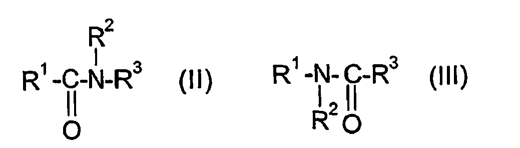 wobei R¹ C₆-bis C₂₂-Alkyl, R² H oder C₁-bis C₄-Alkyl und R³ ein Polyhydroxyalkyl-Rest mit 5 bis 12 C-Atomen und mindestens 3 Hydroxygruppen ist. Vorzugsweise ist R¹ C₁₀-bis C₁₈-Alkyl, R² Methyl und R³ ein C₅-oder C₆-Rest. Beispielsweise erhält man derartige Verbindungen durch die Acylierung von reduzierend aminierten Zuckern mit Säurechloriden von C₁₀-C₁₈-Carbonsäuren.

Vorzugsweise enthalten die erfindungsgemäßen Formen der Formulierungen mit 3 bis 12 mol Ethylenoxid ethoxylierte C₁₀ bis C₁₆ Alkohole, besonders bevorzugt ethoxylierte Fettalkohole insbesondere bevorzugt ein mit 3 bis 12 mol Ethylenoxid ethoxilierter C₁₀-C₂₀-Fettalkohol, als nichtionische Tenside.

Als Komponente E kann die Mischung der Komponenten A bis D bis zu 50, insbesondere bis zu 25 Gew.-Teile Wasser enthalten. Gute Ergebnisse werden mit mehr als 1, insbesondere mit mehr als 5 Gew.-Teilen erzielt. Wasser ist häufig bei der Herstellung des Farbstoffes zugegen. In manchen Fällen kann es eingesetzt werden, um die erfindungsgemäßen Farbmittelformulierungen auf eine gewünschte Farbstärke einzustellen.

Die erfindungsgemäßen Farbmittelformulierungen können aus den Lösungen der nicht sulfonierten Azometallkomplexfarbstoffe A in organischen Lösungsmitteln B und gegebenenfalls Wasser E erhalten werden. Im allgemeinen werden die Komponenten C und D zu der Lösung zugemischt, wobei leicht erhöhte Temperaturen von 50 bis 80°C von Vorteil sind. Auch der feste nicht sulfonierte Azometallkomplexfarbstoff kann als Ausgangsstoff zur Herstellung der Farbmittelformulierung dienen. Er wird üblicherweise nach bekannten Methoden mit den anderen Komponenten C und D durch beispielsweise Einrühren in B bei vorzugsweise leicht erhöhter Temperatur von 50 bis 80°C gelöst Vorteilhafterweise werden Lösungen der nicht sulfonierten Azometallkomplexfarbstoffe in den organischen Lösungsmitteln B und gegebenenfalls Wasser E verwendet, in denen der Azometallkomplexfarbstoff hergestellt wurde.

Die erfindungsgemäßen Farbmittelformulierungen eignen sich in hervorragender Weise zur Verdünnung mit Wasser auf ca. 1 bis 5, beispielsweise 2 Gew.-% Farbstoffkonzentration. Dem Fachmann ist es nach Bedarf möglich, der Lösung übliche Hilfsstoffe wie Benetzungsmittel, Penetratoren, Komplexiermittel oder Sequestriermittel zuzusetzen, im allgemeinen ist dies jedoch nicht erforderlich. Diese Lösungen können in üblicher Weise zur Sprüheinfärbung von Oberflächen verschiedener Materialien wie Textilien, Holz, Faserplatten und beispielsweise Leder, insbesondere von gegerbten Leder verwendet werden. Neben der an sich bevorzugten Einfärbung von trockenem Leder kann auch nasses, abgewelktes Leder gefärbt werden. Dazu können übliche Farb- oder Lackspritzeinrichtungen, beispielsweise Spritzpistolen oder Spritzautomaten, eingesetzt werden. In manchen Fällen werden zum Farbauftrag auch Giessmaschinen eingesetzt. Das Sprühfärben ist dem Fachmann an sich bekannt, s. beispielsweise K.-H. Fischer, Das Leder, 21. Jahrgang 1970 Nr. 8, Seite 189 ff. und H. Wachsmann, JALCA Vol. 801985, Seite 33 ff.

Die erfindungsgemäßen Farbmittelformulierungen sind stabil und lassen sich nur mit Wasser zu sprühfähigen und stabilen Farbstofflösungen mit ca. 2 Gew.-% Farbstoffanteil verdünnen. Damit sind Einfärbungen erzielbar mit einem ausgeglichenen Profil guten anwendungstechnischer Eigenschaften, insbesondere hoher Wassertropfenechtheit und geringer Neigung zur Bronzierung. Die mit diesen Lösungen eingefärbten Leder weisen gute Egalität, hohe Brillanz, ausgeglichene Eindringtiefe, gute Lichtechtheit, hohe Wassertropfenechtheit, hohe Reibechtheit und geringe Bronzierungsneigung auf.

### Beispiele:

### Beispiel 1

Der Farbstoff bestehend aus den Komponenten a-c (C.I. Acid Black 63) 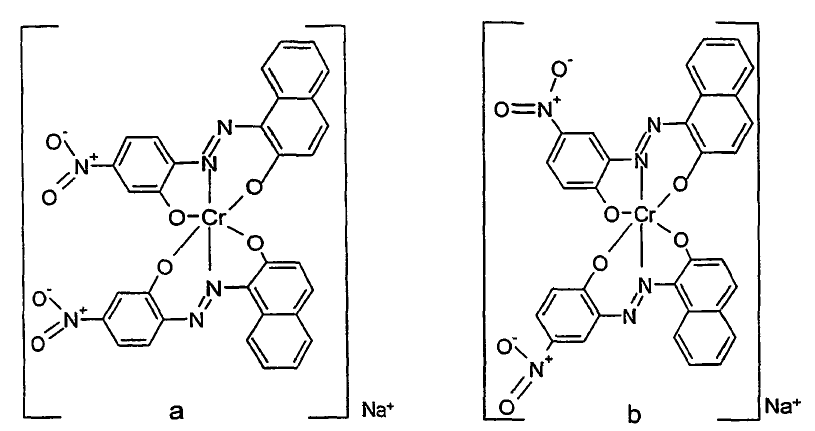 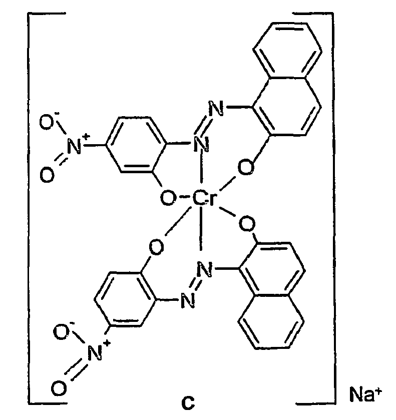 wird nach bekannten Synthesemethoden in einer Lösung bestehend aus 15 Teilen Farbstoff ber. 100 % in 74 Teilen Butyldiglykol und 11 Teilen Wasser hergestellt.

In 100 Teile dieser Farbstofflösung werden 14 Teile eines nichtionischen Tensids (Basis gesättigter i-C₁₃ Oxoalkohol RO(CH₂CH₂O)xH, durchschnittl. x=8) und 14 Teile Polyvinylpyrrolidon mit M_{w} 7000-11000 unter Rühren gelöst.

Die erhaltene Farbstofflösung ist in der Lagerung bis -10°C stabil gegenüber Auskristallisieren des Farbstoffs. Eine Spritzlösung bestehend aus 2 Teilen Farbstofflösung/98 Teilen Wasser ist gegenüber Auskristallisieren/Ausfällungen des Farbstoffs stabil, kann problemlos verarbeitet werden (handelsübliche Spritzpistole "Krautberger HS 25, 1,5 mm Düse) und ergibt auf Leder eine gut deckende, egale Färbung mit gutem Echtheitsniveau.

### Beispiel 2:

Farbstoff der Formel (C.I. Acid Red 227) wird nach bekannten Synthesemethoden in einer Lösung bestehend aus 15 Teilen Farbstoff ber. 100 % in 40 Teilen Butyldiglykol und 34 Teilen
1-Methoxypropanol-2 und 11 Teilen Wasser hergestellt.

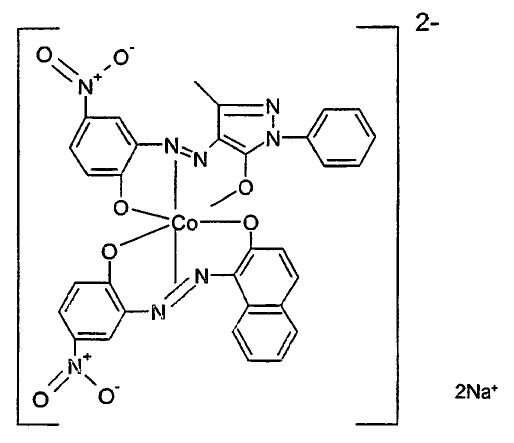

In 100 Teile dieser Farbstofflösung werden 5 Teile eines nichtionischen Tensids (Basis gesättigter i-C₁₃ Oxoalkohol RO(CH₂CH₂O)xH, durchschnittl. x=8) und 10 Teile Polyvinylpyrrolidon mit M_{w} 7000-11000 unter Rühren gelöst.

Die erhaltene Farbstofflösung ist in der Lagerung bis -10°C stabil gegenüber Auskristallisieren des Farbstoffs. Eine Spritzlösung bestehend aus 2 Teilen Farbstofflösung/98 Teilen Wasser ist gegenüber Auskristallisieren/Ausfällungen des Farbstoffs stabil, kann problemlos verarbeitet werden (handelsübliche Spritzpistole "Krautberger HS 25, 1,5 mm Düse) und ergibt auf Leder eine gut deckende, egale Färbung mit gutem Echtheitsniveau.

### Beispiel 3:

### Farbstoff der Formel (C.I. Acid Violet 74)

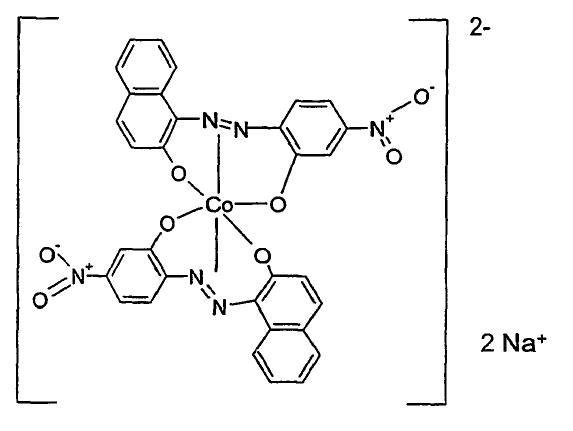

wird nach bekannten Synthesemethoden in einer Lösung bestehend aus 12 Teilen Farbstoff ber. 100% in 76 Teilen Butyldiglykol und 12 Teilen Wasser hergestellt.

In 100 Teile dieser Farbstofflösung werden 15 Teile eines nichtionischen Tensids (Basis gesättigter i-C₁₃ Oxoalkohol RO(CH₂CH₂O)xH, durchschnittl. x=8) und 10 Teile Polyvinylpyrrolidon mit M_{w} 7000-11000 unter Rühren gelöst.

Die erhaltene Farbstofflösung ist in der Lagerung bis -10°C stabil gegenüber Auskristallisieren des Farbstoffs. Eine Spritzlösung bestehend aus 2 Teilen Farbstofflösung/98 Teilen Wasser ist gegenüber Auskristallisieren/Ausfällungen des Farbstoffs stabil, kann problemlos verarbeitet werden (handelsübliche Spritzpistole "Krautberger HS 25, 1,5 mm Düse) und ergibt auf Leder eine gut deckende, egale Färbung mit gutem Echtheitsniveau.

### Beispiel 4

### Farbstoff der Formel (C.I. Acid Yellow 59)

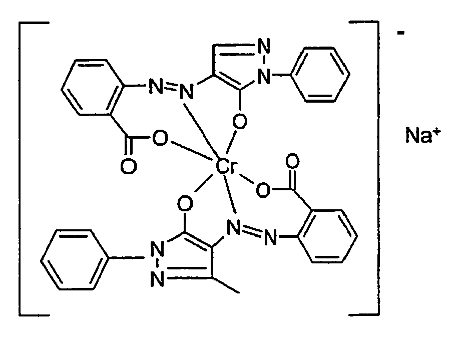

wird nach bekannten Synthesemethoden in einer Lösung bestehend aus 14 Teilen Farbstoff ber. 100 % in 38 Teilen Butyldiglykol 38 Teilen 1-Methoxypropanol-2 und 11 Teilen Wasser hergestellt.

In 100 Teile dieser Farbstofflösung werden 13 Teile eines nichtionischen Tensids (Basis gesättigter i-C₁₃ Oxoalkohol RO(CH₂CH₂O)xH, durchschnittl. X=8) und 8 Teile Polyvinylpyrrolidon mit M_{w} 7000-11000 unter Rühren gelöst.

Die erhaltene Farbstofflösung ist in der Lagerung bis -10°C stabil gegenüber Auskristallisieren des Farbstoffs. Eine Spritzlösung bestehend aus 2 Teilen Farbstofflösung/98 Teilen Wasser ist gegenüber Auskristallisieren/Ausfällungen des Farbstoffs stabil, kann problemlos verarbeitet werden (handelsübliche Spritzpistole "Krautberger HS 25, 1,5 mm Düse) und ergibt auf Leder eine gut deckende, egale Färbung mit gutem Echtheitsniveau.

### Beispiel 5

### Farbstoff der Formel (C.I. Acid Orange 92)

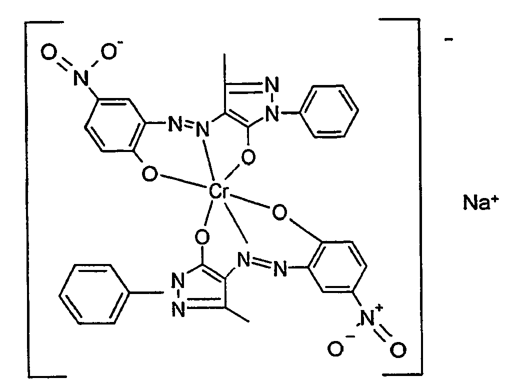

wird nach bekannten Synthesemethoden in einer Lösung bestehend aus 10 Teilen Farbstoff in 72 Teilen Butyldiglykol 4 Teilen N-Methylpyrrolidon (NMP) und 13 Teilen Wasser hergestellt.

In 100 Teile dieser Farbstofflösung werden 6 Teile eines nichtionischen Tensids (Basis gesättigter i-C₁₃ Oxoalkohol RO(CH₂CH₂O)xH, durchschnittl. x=8) und 16 Teile Polyvinylpyrrolidon mit M_{w} 7000-11000 unter Rühren gelöst.

Die erhaltene Farbstofflösung ist in der Lagerung bis -10°C stabil gegenüber Auskristallisieren des Farbstoffs. Eine Spritzlösung bestehend aus 2 Teilen Farbstofflösung/98 Teilen Wasser ist gegenüber Auskristallisieren/Ausfällungen des Farbstoffs stabil, kann problemlos verarbeitet werden (handelsübliche Spritzpistole "Krautberger HS 25, 1,5 mm Düse) und ergibt auf Leder eine gut deckende, egale Färbung mit gutem Echtheitsniveau.

### Beispiel 6

### Farbstoff der Formel (C.I. Acid Red 228)

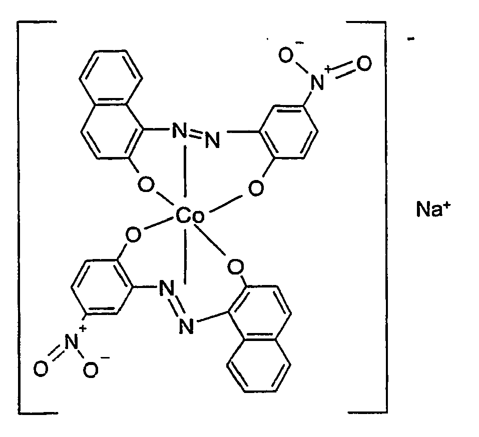

wird nach bekannten Synthesemethoden in einer Lösung bestehend aus 12 Teilen Farbstoff in 76 Teilen Butyldiglykol und 12 Teilen Nasser hergestellt.

In 100 Teile dieser Farbstofflösung werden 7 Teile eines nichtionischen Tensids (Basis gesättigter i-C₁₃ Oxoalkohol RO(CH₂CH₂O)xH, durchschnittl. x=8) und 8 Teile Polyvinylpyrrolidon mit M_{w} 7000-11000 unter Rühren gelöst.

Die erhaltene Farbstofflösung ist in der Lagerung bis -10°C stabil gegenüber Auskristallisieren des Farbstoffs. Eine Spritzlösung bestehend aus 2 Teilen Farbstofflösung/98 Teilen Wasser ist gegenüber Auskristallisieren/Ausfällungen des Farbstoffs stabil, kann problemlos verarbeitet werden (handelsübliche Spritzpistole "Krautberger HS 25, 1,5 mm Düse) und ergibt auf Leder eine gut deckende, egale Färbung mit gutem Echtheitsniveau.

## Patentansprüche

1. Farbmittelformulierung, enthaltend
A) 5 bis 25 Gew.-Teile mindestens eines nicht sulfonierten Azometallkomplexfarbstoffes,
B) 75 bis 95 Gew.-Teile eines organischen Lösungsmittels,
C) 1 bis 40 Gew.-Teile Polyvinylpyrrolidon und,
D) 1 bis 40 Gew.-Teile eines nichtionischen Tensids,
wobei sich die Gew.-Teile auf 100 Gew.-Teile der Mischung aus den Komponenten A und B beziehen.

2. Farbmittelformulierung nach Anspruch 1, in der der nicht sulfonierte Azometallkomplexfarbstoff Chrom und/oder Kobalt als Metallkomponente aufweist.

3. Farbmittelformulierung nach Anspruch 1 oder 2, in der das Poylvinylpyrrolidon ein gewichtsmittleres Molekulargewicht von bis zu 40 000 aufweist.

4. Farbmittelformulierung nach einem der Ansprüche 1 bis 3, in der das nichtionische Tensid ein mit 3 bis 12 mol Ethylenoxid ethoxifierter C₁₀ - C₂₀-Fettalkohol ist.

5. Verfahren zur Verstellung einer Farbmittelformulierung nach einem der Ansprüche 1 bis 4, in dem man die Komponenten C) und D) mit einer Lösung von Komponente A) in Komponente B) vermischt.

6. Verwendung einer Farbmittelformulierung nach einem der Ansprüche 1 bis 4 zur Färbung von Leder.

7. Verwendung einer Farbmittelformulierung hergestellt nach Anspruch 5 zur Färbung von Leder.

8. Leder, das mit einer Farbmittelformulierung nach einem der Ansprüche 1 bis 4 gefärbt ist.

9. Leder, das mit einer Farbmittelformulierung hergestellt nach Anspruch 5 gefärbt ist.

## Claims

1. A colorant formulation comprising
A) from 5 to 25 parts by weight of at least one nonsulfonated azo metal complex dye,
B) from 75 to 95 parts by weight of an organic solvent,
C) from 1 to 40 parts by weight of polyvinylpyrrolidone, and
D) from 1 to 40 parts by weight of a nonionic surfactant,
the parts by weight being based on 100 parts by weight for the mixture of components A and B.

2. The colorant formulation according to claim 1, wherein the nonsulfonated azo metal complex dye includes chromium and/or cobalt as metal component.

3. The colorant formulation according to claim 1 or 2, wherein the polyvinylpyrrolidone has a weight average molecular weight of up to 40 000.

4. The colorant formulation according to any of claims 1 to 3, therein the nonionic surfactant is a C₁₀-C₂₀ fatty alcohol ethoxylated with 3 - 12 mol of ethylene oxide.

5. A process for preparing a colorant formulation according to any of claims 1 to 4, which comprises mixing components C) and D) with a solution of component A) in component B).

6. The use of a colorant formulation according to any of claims 1 to 4 for dyeing leather.

7. The use of a colorant formulation prepared according to claim 5 for dyeing leather.

8. Leather dyed with a colorant formulation according to any of claims 1 to 4.

9. Leather dyed with a colorant formulation prepared according to claim 5.

## Revendications

1. Formulation de colorant, contenant
A) 5 à 25 parties en poids d'au moins un colorant à base d'un complexe métal-azo non sulfoné,
B) 75 à 95 parties en poids d'un solvant organique,
C) 1 à 40 parties en poids de polyvinylpyrrolidone et
D) 1 à 40 parties en poids d'un tensioactif non ionique,
les parties en poids se rapportant à 100 parties en poids du mélange des composants A et B.

2. Formulation de colorant selon la revendication 1, dans laquelle le colorant à base d'un complexe métal-azo non sulfoné comporte du chrome et/ou du cobalt en tuant que composant métallique.

3. Formulation de colorant selon la revendication 1 ou 2, dans laquelle la polyvinylpyrrolidone présente un poids moléculaire moyen en poids jusqu'à 40 000.

4. Formulation de colorant selon l'une quelconque des revendications 1 à 3, dans laquelle le tensioactif non ionique est un alcool gras en C₁₀ à C₂₀ éthoxylé avec 3 à 12 moles d'oxyde d'éthylène.

5. Procédé de fabrication d'une formulation de colorant selon l'une quelconque des revendication 1 à 4, dans lequel les composants C) et D) sont mélangés avec une solution du composant A) dans le composant B).

6. Utilisation d'une formulation de colorant selon l'une quelconque des revendications 1 à 4 pour la coloration de cuir.

7. Utilisation d'une formulation de colorant fabriquée selon la revendication 5 pour la coloration de cuir.

8. Cuir, qui est coloré avec une formulation de colorant selon l'une quelconque des revendications 1 à 4.

9. Cuir, qui est coloré avec une formulation de colorant fabriquée selon la revendication 5.
